# FASCICULE DE BREVET EUROPEEN

(11) **EP 2 539 548 B1**
(45) Date de publication et mention de la délivrance du brevet: **27.01.2016**
(21) Numéro de dépôt: 11712639.1
(22) Date de dépôt: 24.02.2011
(51) Int. Cl.: F01D 25/16, F01D 9/04

(54) **SUPPORT DE PALIER ARRIÈRE SOUPLE AVEC BUTÉE POUR TURBOMACHINE**
FLEXIBLE RÜCKWÄRTIGE LAGERABSTÜTZUNG MIT EINEM STÜTZPFEILER FÜR EINEN TURBINENMOTOR
FLEXIBLE REAR BEARING MOUNTING, HAVING AN ABUTMENT, FOR A TURBINE ENGINE

(30) Priorité: 25.02.2010 FR 1051358
(43) Date de publication de la demande: 02.01.2013
(73) Titulaire: Turbomeca, 64510 Bordes (FR)
(72) Inventeur: DIJOUD, Marc, Maurice, F-64320 Ousse (FR); SAHORES, Jean-Luc, Pierre, F-64110 Mazères-Lezons (FR); CASAUX-BIC, Jean-Maurice, F-64680 Buziet (FR)
(74) Mandataire: Gevers France
(86) Numéro de dépôt international: PCT/FR2011/050390
(87) Numéro de publication internationale: WO 2011/107694

(56) Documents cités:
- EP-A1- 2 071 142
- FR-A- 1 346 653
- GB-A- 595 346
- GB-A- 952 774
- US-A- 2 869 941
- US-A- 4 302 062
- US-A- 5 634 767

## Description

Le domaine de la présente invention est celui des turbomachines aéronautiques et plus particulièrement celui de leurs pièces participant au support des paliers de leurs arbres de rotation.

Les turbomachines aéronautiques, qu'elles soient mono- ou multi-corps, comportent généralement une ou plusieurs pièces structurales, dénommées supports de palier, qui soutiennent le ou les paliers sur lesquels tournent les arbres de rotation de ces corps. De telles pièces peuvent également soutenir l'arbre de puissance entraîné par la turbine libre dans le cas d'un turbomoteur. Dans le cas des supports de palier pour les paliers arrière, ceux-ci sont soumis à des contraintes d'origine thermique relativement importantes. Ils sont en effet rattachés au carter extérieur du moteur par une bride qui est située en zone froide alors que leur partie centrale, en forme de canal est traversée par les gaz du moteur et est donc située dans une zone particulièrement chaude. Vers l'intérieur du moteur ils sont rattachés à un ensemble de pièces formant un boîtier dans lequel se trouvent les paliers de soutien des arbres de rotation. Ces boîtiers sont eux aussi situés dans une zone relativement froide car baignée par l'air de refroidissement du moteur et par l'huile de lubrification des paliers. Il convient donc de prendre en compte les déplacements radiaux différentiels susceptibles d'apparaître en fonctionnement du fait de ces écarts de températures entre les diverses parties composant ce support.

A cette fin les supports de paliers arrières ont généralement la forme d'un canal annulaire traversés par des bras structuraux par lequel passent les gaz, qui est prolongé vers l'extérieur et vers l'intérieur par deux parties aux géométries complexes, dénommées épingles. Ces épingles permettent de relier la partie centrale rigide qui porte le palier à la partie extérieure tout en autorisant les déplacements radiaux occasionnés par les écarts de température. Dans l'état de l'art actuel, ces épingles sont axisymétriques ou partiellement ajourées pour augmenter leur souplesse tout en garantissant une raideur de palier suffisante.

En effet, dans le cas particulier d'une architecture intégrant un support de palier arrière, deux objectifs s'opposent lors de la conception de ce support : il est nécessaire, en premier lieu, de disposer d'une raideur suffisante pour piloter le dimensionnement de la ligne d'arbre et limiter les déplacements des rotors sous facteur de charge (c'est à dire lorsque la turbomachine est soumise à des accélérations transversales à son axe de rotation) et en second lieu, d'assurer, par le dimensionnement des épingles inférieures et extérieures, une souplesse suffisante au support de palier dans le but d'accroître la durée de vie de la pièce.

Cette pièce, réalisée en fonderie ou mécano-soudée, est complexe et a par conséquent un cout de fabrication élevé ; par ailleurs sa fiabilité mécanique en service peut générer des surcoûts non négligeables, qui ont pour origine soit de nombreuses réparations soit une mise prématurée au rebut. Pour améliorer sa durée de vie il importe de concevoir une telle pièce en restituant le plus de souplesse possible au niveau de ses épingles, tout en garantissant une raideur suffisante à l'ensemble pour qu'il maintienne l'alignement de la ligne d'arbre qu'il soutient.

Des exemples de réalisation de telles pièces sont données par les demandes de brevets GB 952774 ou FR 1346653, mais celles-ci sont réalisées par l'adjonction de pièces spécifiques, ayant pour seule fonction d'assurer la souplesse recherchée. Elles ne font pas l'objet d'une intégration poussée dans le mobile de turbine.

La présente invention a pour but de répondre à un tel objectif en proposant un support de palier arrière à durée de vie améliorée, qui assure un maintien stable aux paliers de l'arbre de rotation qu'il soutient et dont la réalisation s'effectue en réduisant autant que faire se peut le nombre de pièces présentes dans un module de turbine. Un module de turbine est un ensemble de pièces, comprenant au moins une roue de turbine, associées entre elles de façon à constituer un sous-ensemble autonome de la turbomachine ; ce sous-ensemble peut ainsi être assemblé aux autres modules ou désassemblé de la turbomachine comme une pièce unique, mécaniquement autonome.

A cet effet, l'invention est définie par les caractéristiques de la revendication 1.

On obtient ainsi une rigidité radiale variable de la pièce selon qu'elle est ou non en contact avec la butée, associée à une grande flexibilité lorsqu'elle n'interagit pas avec la butée. La plus grande partie des sollicitations thermomécaniques en fatigue se produisant lorsque la pièce n'est pas sur butée, on obtient une pièce dans laquelle se développent moins de contraintes, ce qui lui assure une durée de vie augmentée. La souplesse augmentée obtenue hors butée améliore le comportement global de la pièce soumise aux dilatations thermiques différentielles. Une butée radiale liée à la structure de la turbomachine est ajoutée de manière à limiter les déplacements supplémentaires non - axisymétriques liés aux chargements de type manoeuvres de l'aéronef ou efforts gyroscopiques, par mise en contact d'un des éléments du support palier sur cette butée.

Ces pièces de liaison, ou épingles, peuvent être rapportées au dit canal ou faire partie intégrante de la pièce complète.

Toutefois, même en cas de contact permanent de la butée sur une partie du support palier (canal ou épingle structurale), il est possible d'optimiser la durée de vie des épingles structurales sous le chargement lié aux dilatations thermiques différentielles puisque les pièces ne sont pas rigidement liées l'une à l'autre (contact avec glissement). Des phénomènes de fretting et d'usure pourront alors être constatés mais ceux-ci sont sans impact majeur sur la fonction des différentes pièces et notamment sur la permanence de l'effet sur la rigidité radiale.

Afin de réduire le nombre de pièces à mettre en oeuvre et simplifier la réalisation du module de turbine la butée est positionnée en extrémité d'une pièce de soutènement fixée sur une bride de la structure externe du moteur, qui est constituée par une extension longitudinale d'un anneau de turbine positionné en regard d'une roue de turbine de la turbomachine.

Avantageusement la pièce de liaison à la structure externe et la pièce de soutènement sont toutes deux conformées pour être fixées sur une même bride de la structure externe de la turbomachine.

Dans un mode particulier de réalisation la butée interagit avec une des pièces de liaison à la structure externe.

Dans un autre mode particulier de réalisation la butée interagit directement avec une paroi radialement externe dudit canal.

L'invention porte également sur une turbomachine comportant au moins une pièce de support d'un des paliers d'un arbre de rotation telle que décrite ci-dessus.

L'invention sera mieux comprise, et d'autres buts, détails, caractéristiques et avantages de celle-ci apparaîtront plus clairement au cours de la description explicative détaillée qui va suivre, d'un ou plusieurs modes de réalisation de l'invention donnés à titre d'exemples purement illustratifs et non limitatifs, en référence aux dessins schématiques annexés.

Dans la description les termes radiaux, axiaux, longitudinaux se rapportent à l'axe de rotation de la turbomachine alors que les termes amont et aval font référence au sens d'écoulement des gaz dans cette même turbomachine. Sur ces dessins :
- la figure 1 est une vue en perspective d'un support de palier arrière avec épingle, selon une réalisation de l'art antérieur;
- la figure 2 est une vue en coupe d'un turbomoteur comportant un support de palier avec épingle ;
- la figure 3 est une vue en coupe d'un turbomoteur selon un premier mode de réalisation de l'invention ;
- la figure 4 est une vue en coupe d'un turbomoteur selon un second mode de réalisation de l'invention, et

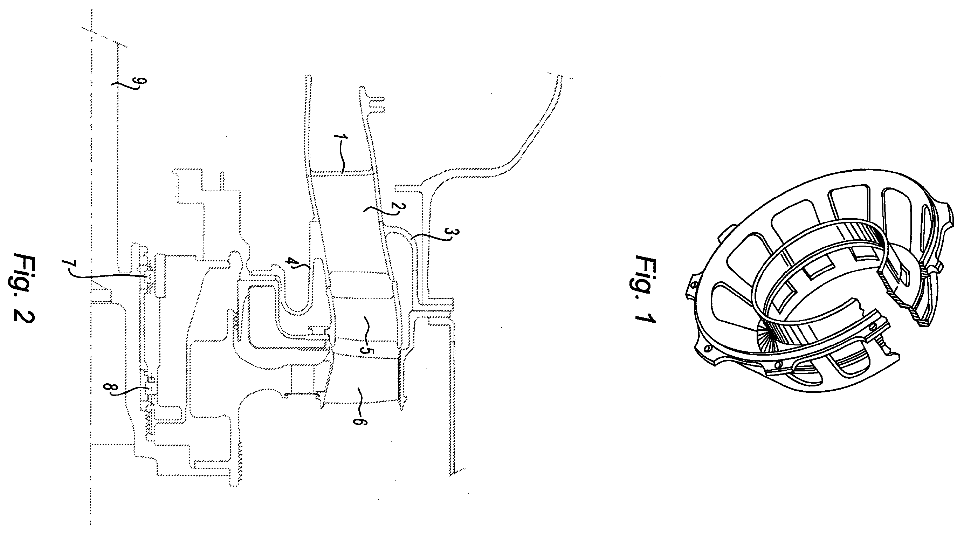

La figure 1 montre un support de palier tel que décrit dans le brevet américain US 5161940. Dans l'exemple de ce brevet la technologie des cages souples est appliquée seulement au support de palier décrit et ne s'étend pas à un support de palier intégrant une partie du canal de la veine. Ces pièces présentent en effet une difficulté technologique supplémentaire dans leur conception et leur dimensionnement, à savoir l'optimisation en termes de durée de vie sous chargement thermomécanique et de performance aérodynamique.

En se référant à la figure 2, on voit la partie située en aval de la turbine haute pression du générateur de gaz d'un turbomoteur comportant un support de palier à épingle. Ce support palier présente des épingles structurales ajourées mais dans la limite d'un objectif de raideur radiale rendu nécessaire par le maintien de la ligne d'arbre en fonctionnement normal et sous charges de manoeuvre. Les gaz, en provenance du générateur de gaz, passent dans un canal inter turbines 2 qui est relié, au moyen d'une épingle extérieure 3 à la structure externe du moteur et d'une épingle intérieure 4 au boîtier des paliers. L'ensemble constitué par le canal inter turbines 2 et les deux épingles 3 et 4 constitue le support de palier arrière 1 du moteur. En aval de ce support de palier arrière les gaz traversent un distributeur de turbine libre 5 puis la roue de turbine libre 6 à laquelle ils transmettent leur énergie. La roue de turbine libre est reliée mécaniquement à l'arbre d'entraînement 9 qui tourne par rapport à la structure à l'aide de deux paliers 7 et 8 et qui récupère la puissance du moteur. Ces deux paliers sont eux-mêmes portés par la structure du moteur, à laquelle ils sont reliés par l'intermédiaire du support de palier arrière 1.

Dans cette configuration de l'art antérieur l'épingle supérieure n'est que légèrement ajourée sur sa circonférence, afin de donner un peu de souplesse au support de palier, mais dans une limite stricte pour ne pas dégrader la raideur radiale de la pièce et le maintien en place des paliers. La souplesse de l'épingle du support palier est donc relativement limitée ; il s'ensuit une insuffisance dans sa liberté de mouvement pour répondre aux sollicitations radiales d'origine thermomécanique, et donc une durée de vie insuffisante du support de palier.

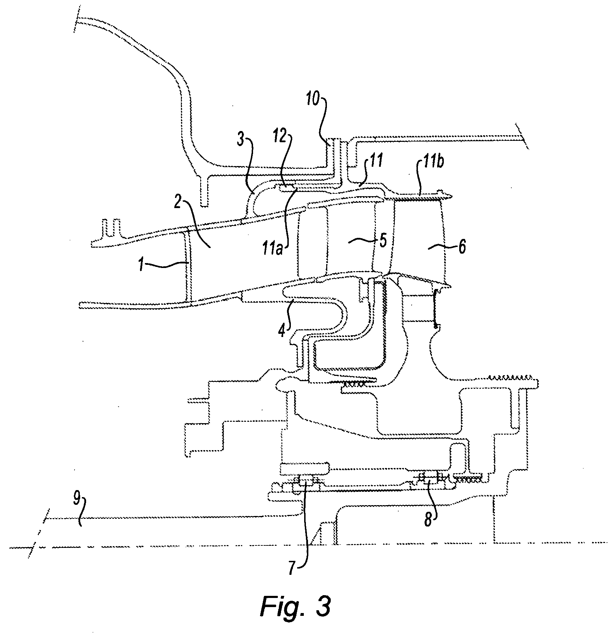

En se référant maintenant à la figure 3 on voit un premier mode de réalisation de l'invention. L'épingle supérieure 3 est fixée, du côté extérieur, à une bride 10 de la structure du moteur sur laquelle est également fixé un anneau de turbine 11 de la turbine libre ; l'anneau de turbine est la pièce qui assure radialement, au moyen d'une extension arrière 11b, l'étanchéité vers l'extérieur de la veine de gaz, au niveau de la roue de turbine 6. Dans le premier mode de réalisation l'anneau de turbine 11 présente en outre une extension avant 11a de forme annulaire, qui s'étend de la bride 10 vers l'avant du moteur et qui présente à son extrémité avant une excroissance formant butée radiale 12, sur laquelle vient se bloquer l'épingle 3 lorsqu'elle est déformée et qu'elle se déplace en direction de l'axe de rotation du moteur. L'ajout de la butée 12 permet d'ajourer l'épingle 3 de manière plus importante, à l'image d'une cage à barreaux, pour augmenter sa souplesse et sa propension à absorber les dilatations thermiques différentielles entre le canal et la bride extérieure.

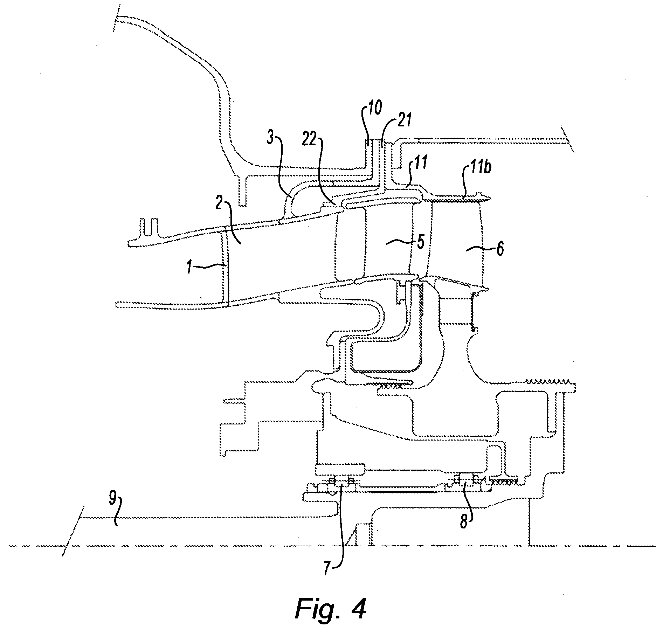

En se référant à la figure 4 on voit un deuxième mode de réalisation de l'invention. Les éléments du support de palier identiques au premier mode de réalisation sont désignés par le même chiffre de référence et ne sont pas décrits à nouveau. L'épingle 3 est fixée de la même façon à la bride 10, comme l'est aussi l'anneau de turbine 11. Dans cette configuration cet anneau ne comporte qu'une seule extension 11b, au niveau de la roue de turbine 6, l'extension 11a étant supprimée. Une pièce se soutènement 21, de forme annulaire, est, en revanche, introduite, qui est fixée sur la bride 10 et qui s'étend en direction de l'avant du moteur. Elle se termine comme précédemment par une butée radiale 22, qui est située cette fois au niveau de l'extrémité arrière du canal 2 du support de palier 1, et non pas en face de l'épingle supérieur 3. Elle est représentée comme empêchant le canal 2 de se déplacer vers l'extérieur du moteur. Mais, comme dans l'un ou l'autre mode de réalisation les butées sont de forme annulaire, elles agissent de façon similaire ; elles limitent les déplacements du support de palier en le bloquant soit par la partie de la butée visible sur la figure, soit par celle qui lui est diamétralement opposée.

Que ce soit dans le premier ou le second mode de réalisation, les butées 12 ou 22 peuvent présenter, moteur à l'arrêt, sans que cette configuration soit impérative, un léger retrait (non représentés sur les figures) par rapport à la partie de l'épingle supérieure 3 ou du canal 2 qui leur font face. Ce retrait permet un déplacement radial du support de palier 1 sous le chargement thermomécanique du fait de la flexibilité des épingles 3 et 4. Ce déplacement est possible tant que, soit l'épingle supérieure 3 dans le premier mode, soit le canal 2 dans le second, ne touche pas la butée correspondante. Au-delà, tout déplacement transversal du support de palier, lié à un chargement de type manoeuvre de l'aéronef, est limité par la butée correspondante et la flexibilité en déplacement radial du support de palier 1 grâce aux épingles est supprimée du fait de cette mise sur butée.

Il est bien évident que la rigidité des extensions avant, que ce soit celle 11a de l'anneau de turbine 11 ou celle de la pièce de soutènement 21, sont suffisantes pour arrêter les déplacements transversaux du support de palier 1 lorsque celui-ci arrive sur la butée correspondante 12 ou 22.

On va maintenant décrire le fonctionnement de l'invention selon le premier mode de réalisation. Le fonctionnement selon le deuxième mode de réalisation est identique.

En fonctionnement le support de palier 1 peut être amené à se déplacer sous l'effet du chargement thermomécanique ou sous l'effet d'un facteur de charge appliqué à l'aéronef. Ce déplacement peut se produire soit sous une forme annulaire lorsque les sollicitations sont régulièrement réparties sur la périphérie du support de palier (c'est le cas des déformations thermomécaniques) soit sous une forme non axisymétrique (c'est le cas d'un facteur de charge). Les épingles 3 et 4, en forme en cage souple dans l'invention, sont plus échancrées que dans l'art antérieur afin de leur procurer une souplesse augmentée. De ce fait le support de palier 1 se déplace plus librement en réponse à ces sollicitations tant qu'il n'est pas sur la butée 12. Dans ces conditions les contraintes ne se développent pas dans les épingles qui présentent donc une meilleure résistance en fatigue et une durée de vie augmentée.

Après une première déformation permise par cette souplesse augmentée, l'épingle 3 arrive contre la butée 12, au moins sur un de ses secteurs angulaires à l'occasion de charges supplémentaires, notamment à l'occasion de manoeuvres de l'aéronef. Le retrait entre la butée et le support palier est optimisé de manière à ce que ceux-ci ne soient pas en contact sous chargement thermomécanique seul. Cette limite au déplacement du canal 2 est rendue nécessaire par le besoin de conserver une rigidité globale du support de palier et de maintenir un alignement de l'arbre le plus proche possible de l'axe de symétrie du moteur.

Mais tant que cette limite n'a pas été atteinte le support de palier peut se déformer plus librement de par la souplesse des épingles 3 et 4. Alors que, dans l'art antérieur, la flexibilité des épingles était moindre et que les contraintes développaient plus rapidement un niveau élevé, ce qui est néfaste pour la tenue en fatigue, ce développement se situe, dans l'invention, à un stade plus tardif. On obtient ainsi une augmentation très sensible de la durée de vie des supports de palier 2.

Le fonctionnement de ce support de palier amélioré a été décrit avec une butée 12, ou 22, s'étendant sur toute la circonférence du moteur. L'invention peut tout aussi bien être réalisée avec une pluralité de butées réparties de façon régulière sur cette circonférence. Les butées 12 et 22 représentées sous une forme annulaire ne sont pas forcément des pièces axisymétriques et peuvent présenter des ruptures d'axisymétries (ajourages, fentes) pour optimiser leur comportement thermomécanique.

Bien que l'invention ait été décrite en relation avec plusieurs modes de réalisation particuliers, il est bien évident qu'elle comprend tous les équivalents techniques des moyens décrits ainsi que leurs combinaisons si celles-ci entrent dans le cadre de l'invention.

## Revendications

1. Ensemble constitué d'une pièce de support d'au moins un palier (7, 8) d'un arbre d'une turbomachine, ladite turbomachine comportant une structure externe (10) enveloppant ses parties mobiles et un boîtier portant ledit palier, ces deux éléments étant destinés à être reliés l'un à l'autre par ladite pièce de support, et d'une pièce de soutènement (11, 21) conformée pour être fixée sur la structure externe (10) de la turbomachine et pour former butée pour ladite pièce de support, ladite pièce de support comportant au moins un canal (2) traversé par les gaz du moteur et des pièces de liaison (3, 4) conformées pour fixer ledit canal d'une part à la structure externe (10) du moteur et d'autre part audit boîtier, au moins une des pièces de liaison étant flexible pour permettre un déplacement radial dudit canal (2), l'amplitude dudit déplacement radial étant limitée par la venue d'au moins un des éléments (2, 3, 4) de la pièce de support sur une butée (12) portée par ladite pièce de soutènement (11), **caractérisé en ce que** ladite pièce de soutènement (11) comporte une extension arrière (11b) s'étendant longitudinalement vers l'aval au-delà de l'extension longitudinale dudit canal, en référence à la direction de l'axe de rotation de la turbomachine, de façon à générer un anneau pouvant servir d'anneau de turbine pour une roue de turbine (6) de la turbomachine.

2. Ensemble selon la revendication 1 dans laquelle la pièce de liaison (3) à la structure externe et la pièce de soutènement (11) sont toutes deux conformées pour être fixées sur une même bride (10) de la structure externe de la turbomachine.

3. Ensemble selon l'une des revendications 1 ou 2 dans laquelle la butée (12) interagit avec la pièce de liaison (3) à la structure externe.

4. Ensemble selon l'une des revendications 1 ou 2 dans laquelle la butée interagit directement avec une paroi radialement externe dudit canal (2).

5. Turbomachine comportant au moins un ensemble selon l'une des revendications précédentes.

## Patentansprüche

1. Baugruppe, umfassend ein Trägerteil mit mindestens einem Lager (7, 8) einer Welle einer Turbomaschine, wobei diese Turbomaschine eine Außenkonstruktion (10), die ihre mobilen Teile umhüllt, und ein Gehäuse umfasst, das dieses Lager trägt, wobei diese beiden Bauteile dazu bestimmt sind, durch das Trägerteil miteinander verbunden zu werden, sowie ein Stützteil (11, 21), das so ausgebildet ist, dass es an der Außenkonstruktion (10) der Turbomaschine befestigt werden kann und dass es einen Anschlag für dieses Trägerteil bildet, wobei dieses Trägerteil mindestens einen Kanal (2), durch den die Motorgase strömen, sowie Verbindungsteile (3, 4) enthält, die so ausgebildet sind, dass sie diesen Kanal einerseits an der Außenkonstruktion (10) des Motors und andererseits an diesem Gehäuse befestigen können, wobei mindestens eines dieser Verbindungsteile flexibel ist, um eine radiale Verschiebung dieses Kanals (2) möglich zu machen, wobei die Amplitude dieser radialen Verschiebung durch das Vorhandensein mindestens eines der Bauteile (2, 3, 4) des Trägerteils auf einem Anschlag (12) begrenzt wird, der vom genannten Stützteil (11) getragen wird, **dadurch gekennzeichnet, dass** diese Stützteil (11) eine rückwärtige Verlängerung (11b) enthält, die in Längsrichtung in Arbeitsrichtung über die Längsverlängerung des genannten Kanals bezogen auf die Richtung der Rotationsachse der Turbomaschine hinausragt, so dass ein Ring erzeugt wird, der als Turbinenring für ein Turbinenrad (6) der Turbomaschine dienen kann.

2. Baugruppe gemäß Anspruch 1, bei der sowohl das Verbindungsteil (3) mit der Außenkonstruktion als auch das Stützteil (11) so ausgebildet sind, dass sie am selben Flansch (10) der Außenkonstruktion der Turbomaschine befestigt werden können.

3. Baugruppe gemäß einem der Ansprüche 1 oder 2, bei dem der Anschlag (12) mit dem Verbindungsteil (3) zur Außenkonstruktion interagiert.

4. Baugruppe gemäß einem der Ansprüche 1 oder 2, bei dem der Anschlag direkt mit einer radial externen Wand dieses Kanals (2) interagiert.

5. Turbomaschine mit mindestens einer Baugruppe gemäß einem der vorhergehenden Ansprüche.

## Claims

1. An assembly consisting of a mounting component for mounting at least one bearing (7, 8) of a turbomachine shaft, said turbomachine comprising an external structure (10) enveloping its moving parts and a casing carrying said bearing, these two elements being intended to be connected to one another by said mounting component, and of a support component (11, 21) configured to be fixed to the external structure (10) of the turbomachine and to form an abutment for said mounting component, said mounting component comprising at least one passage (2) through which the gases from the engine pass and connecting components (3, 4) which are configured to attach said passage firstly to the external structure (10) of the engine and secondly to said casing, at least one of the connecting components being flexible so as to allow a radial movement of said passage (2), the amplitude of said radial movement being limited by at least one of the elements (2, 3, 4) of the mounting component coming into abutment with an abutment (12) carried by said support component (11), **characterized in that** said support component (11) comprises a rear extension (11b) extending longitudinally downstream beyond the longitudinal extension of said passage, with reference to the direction of the axis of rotation of the turbomachine, so as to generate an annulus that can act as a turbine shroud for a turbine wheel (6) of the turbomachine.

2. The assembly as claimed in claim 1, in which the connecting component (3) for connecting to the external structure and the support component (11) are both configured to be fixed to the same flange (10) of the external structure of the turbomachine.

3. The assembly as claimed in one of claims 1 and 2, in which the abutment (12) interacts with the connecting component (3) for connecting to the external structure.

4. The assembly as claimed in one of claims 1 and 2, in which the abutment interacts directly with a radially external wall of said passage (2).

5. A turbomachine comprising at least one assembly as claimed in one of the preceding claims.
